# EUROPEAN PATENT SPECIFICATION

(11) **EP 1 324 901 B1**
(45) Date of publication and mention of the grant of the patent: **10.11.2004**
(21) Application number: 01967899.4
(22) Date of filing: 19.09.2001
(51) Int. Cl.: B60R 22/20, B60R 22/46

(54) **A SAFETY-BELT ARRANGEMENT**
SICHERHEITSGURTANORDNUNG
SYSTEME DE CEINTURE DE SECURITE

(30) Priority: 21.09.2000 GB 0023216
(43) Date of publication of application: 09.07.2003
(73) Proprietor: AUTOLIV DEVELOPMENT AKTIEBOLAG, 447 83 Vargarda (SE)
(72) Inventor: DENIS, Arnaud, F-78440 Lainville-en-Vexin (FR)
(74) Representative: Frankland, Nigel Howard
(86) International application number: PCT/SE2001/001992
(87) International publication number: WO 2002/024495

(56) References cited:
- EP-A1- 0 411 809
- DE-A1- 3 420 397
- GB-A- 2 242 608

## Description

THE PRESENT INVENTION relates to a safety-belt arrangement, and more particularly relates to a safety-belt arrangement for use in a motor vehicle to provide protection for a front-seat occupant of the vehicle.

It has been proposed to provide a safety-belt arrangement in a two-door vehicle in which one end of the safety-belt is slidably mounted on an elongate bar or rod which extends rearwardly from the front seat of the vehicle. The lower end of part of the safety-belt may then be moved rearwardly, sliding along the bar or rod, to facilitate access to the rear seats of the vehicle. If the lower end of the safety-belt was not mounted in this way, and, instead, was secured to a fixed anchoring point on the front seat or adjacent the front seat, the safety-belt would impede access to the rear seats of the vehicle. A prior proposed arrangement at this time is shown in GB-A-2,242,608 in which the rod is mounted on the front seat and moves forwardly and rearwardly with the front seat. In alternate arrangements, which have been incorporated in manufactured motor vehicles, the rod has been secured in position directly on the chassis or shell of the vehicle.

The present invention relates to an improved safety-belt arrangement which incorporates a bar or rod similar to that present in the prior proposed safety-belt arrangements.

According to this invention there is provided a safety-belt arrangement to provide protection for a front-seat passenger in a motor vehicle, the safety-belt arrangement comprising a safety-belt, one end of which is connected to a retractor, and the other end of which is connected to a spool to be wound on to the spool, the spool being slidably mounted on a bar, the bar being located adjacent the side wall of the vehicle and extending rearwardly of the front-seat of the vehicle towards a rear seat of the vehicle, the spool being adapted to be located on the forward part of the bar when the safety-belt is in use, and on the rear part of the bar when the safety-belt is not in use, the spool being rotatable about an axis which is coincident with the axis of the bar for altering the amount of safety-belt wound on the spool.

Preferably means are provided for rotating the spool to wind in safety-belt on to the spool.

Advantageously means are provided to permit the spool to rotate to pay-out safety-belt with a load-limiting energy absorbing effect.

Conveniently wherein at least part of the bar is mounted to rotate and spool is mounted on the bar so as to rotate with the bar. In one embodiment the whole bar is mounted to rotate.

Conveniently the bar is provided with splines, and the spool is provided with a splined passage that receives the splined bar.

Preferably the means for winding in safety-belt comprise a mechanism adapted to rotate the bar.

Advantageously the mechanism adapted to rotate the bar comprise a pre-tensioner adapted to apply tension to a cable, that cable being partially wound on a pulley mounted on the bar, the pulley being connected to the bar to rotate the bar.

Conveniently the pre-tensioner incorporates the said means for permitting the spool to rotate to pay-out the safety-belt.

In an alternative embodiment part of the bar is in the form of a torsionally deformable portion of the bar, one end of the bar being non-rotationally mounted in position, the deformable portion of the bar being between said one end and said spool.

Preferably the rear part of the bar is mounted to part of the chassis or shell of the vehicle, and the front part of the bar is mounted on a support provided on a carriage supporting the squab of the seat, the support on the carriage slidably engaging the forward part of the bar. However, in an alternative arrangement, both ends of the bar may be mounted on the chassis or shell of the vehicle.

In order that the invention may be more readily understood, and so that further features thereof may be appreciated, the invention will now be described, by way of example, with reference to the accompanying drawings in which:
FIGURE 1 is a diagrammatic side view of parts of a motor vehicle illustrating a safety-belt arrangement in accordance with the invention,
FIGURE 2 is an enlarged view of certain components of the safety-belt arrangement of Figure 1,
FIGURE 3 is a further view corresponding to Figure 1 illustrating the safety-belt arrangement in an alternative condition,
FIGURE 4 is a view corresponding to Figure 1 illustrating the safety-belt arrangement in use, and
FIGURE 5 is a view, corresponding to Figure 1, illustrating an alternate embodiment of the invention.

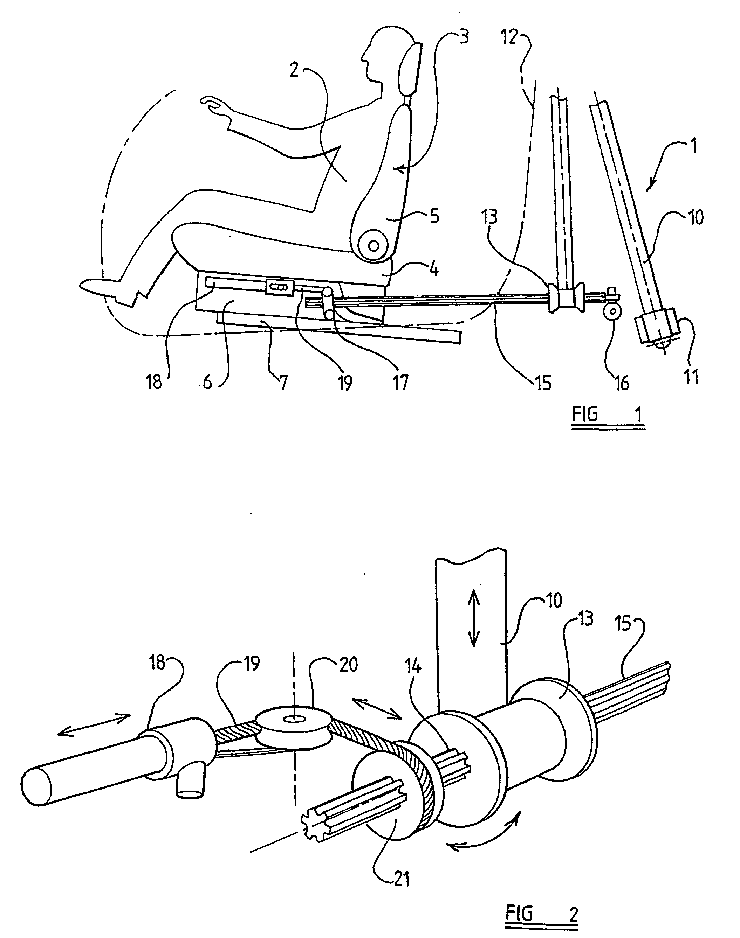

Referring initially to Figure 1 of the accompanying drawings, a safety-belt arrangement 1 is provided within a motor vehicle to provide protection for an occupant 2 of a front-seat 3 of the vehicle. The vehicle is a two-door vehicle, with each door providing access to a front seat and also to a rear seat. The seats are provided with a squab 4 and a back-rest 5, the squab 4 being mounted on a carriage 6 which is mounted for sliding movement along rails 7 secured to the floor of the vehicle.

The safety-belt arrangement 1 comprises a webbing belt 10, one end of which is connected to a retractor reel 11 which may be mounted to the floor of the vehicle at a position behind the seat 3. The webbing belt may pass through a pillar loop mounted on the "B"-Post 12 of the vehicle, and the other end of the belt is connected to and partly wound round a reel or spool 13. The reel or spool 13, as can be seen more clearly from Figure 2, has a splined axial bore 14 by means of which it is mounted on a correspondingly splined bar or rod 15 so that it rotates with the rod about an axis coincident with the axis of the rod.

The bar 15 is mounted in the motor vehicle and extends generally horizontally. The bar 15 is located adjacent the side wall of the vehicle and extends rearwardly of the front seat 3, towards a rear seat of the vehicle. The rearward part of the bar or rod 15 is mounted, by a mounting bracket 16, to part of the chassis or shell of the vehicle so that the bar 15 is secured in position, but is rotatable about its own axis. The forward end of the bar or rod 15 is connected to a support 17 mounted on the carriage 6 that supports the squab 4 of the seat 3. Again the support is such that the bar 15 may rotate about its own axis. Also mounted on the carriage 6 is a pre-tensioner 18 which is connected by means of a wire or cable 19, which passes a guide pulley 20, to a splined pulley-wheel 21 which is slidably mounted on the bar 15 so that rotation of the pulley-wheel will rotate the rod.

The linear pre-tensioner 18 is a known device which is adapted to respond to a signal from an appropriate sensor to apply tension to the wire 19, and which is provided with a load-limiting mechanism which, in response to a very substantial force applied to the wire 19, effectively permits wire 19 to be paid out with the absorption of energy, thus exhibiting a load-limiting effect. GB-A-2,222,510 discloses a suitable pretensioning mechanism, and GB-A-2,314,535 discloses an appropriate load-limiting mechanism, although other pre-tensioners and load-limiters may be used.

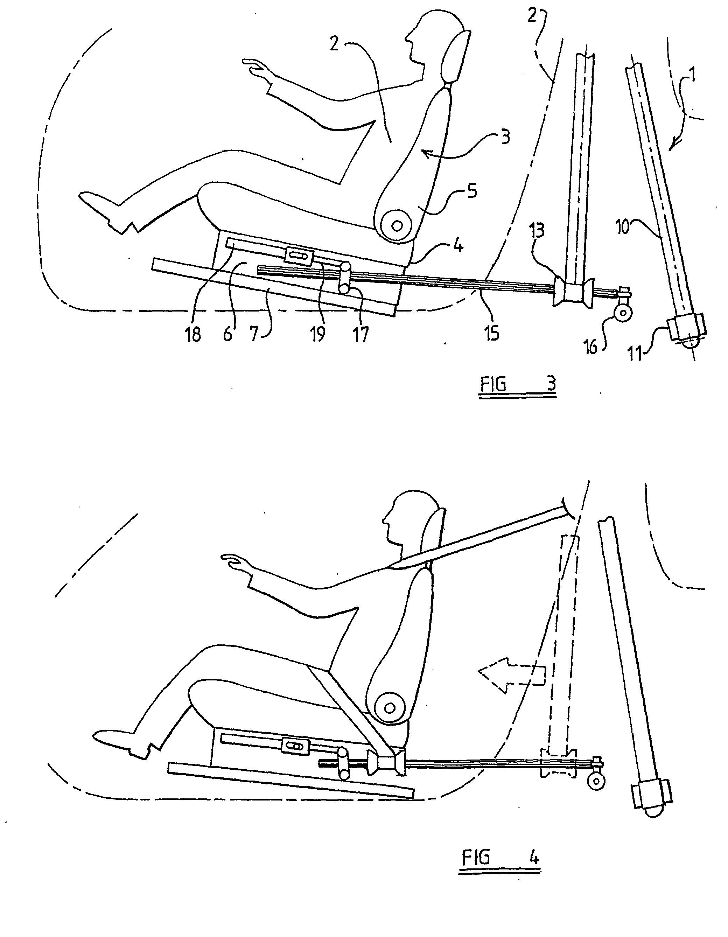

It is to be appreciated that the pulley-wheel 21 is retained within the supporting bracket 17. The seat 3 may thus be slid along the rails 7 from a forward position, as shown in Figure 1, to a rearward position as shown in Figure 3. The support 17 and the pulley 21 thus slide along the bar 15 as the position of the seat is adjusted.

When the safety-belt 1 is to be utilised, a tongue present on the webbing belt 10 is passed across a shoulder of the occupant to a buckle which may, for example, be mounted on the squab of the seat 3. The safety-belt then occupies the traditional condition illustrated in Figure 4 in which the safety-belt comprises a diagonal strap and a lap strap. It is to be appreciated that with the safety-belt in this condition, the spool or reel 13 has been drawn along the bar 15 from an initial rear position, as shown in solid lines in Figures 1 and 3, and as shown in phantom in Figure 4, in which the webbing belt 10 does not impede access to a rear seat in the vehicle, to a forward position which the spool or reel 15 is located adjacent that part of the squab 4 of the seat that supports the back-rest 3. The safety-belt thus has a desired geometry.

In the event that an accident should arise, a sensor associated with the pre-tensioner 18 will activate the pre-tensioner, thus drawing the wire 19 into the pre-tensioner, thus causing the spool 21 to rotate in an anti-clockwise sense as shown in Figure 2. This will cause the rod or bar 15 to rotate in an anti-clockwise sense, thus serving to draw in the webbing belt 10 on to the spool 13. However, should a very heavy load be applied to the webbing belt 10, the spool 13 will tend to rotate in a clockwise direction, thus tending to rotate the pulley 21 in the clockwise direction, thus tending to withdraw the wire 19 from the pre-tensioner 18. The wire 19 may be withdrawn from the pre-tensioner 18 with a load-limiting and energy absorbing effect under these circumstances, thus permitting a small amount of webbing belt 10 to be withdrawn from the spool 13.

It is to be appreciated that in the initial condition of the described embodiment, a certain length of webbing belt 10 will be pre-wound on to the spool 13 so that the load-limiting and energy absorbing effect may be experienced even if the pre-tensioner is not actuated in response to a signal from a sensor responsive to an accident situation.

It is thus to be appreciated that in the described embodiment, the spool 13 is mounted for rotation about an axis which is co-incident with the axis of the bar 15, and the spool 13 may be rotated in one sense, on actuation of the pre-tensioner, in order to wind in the safety-belt on to the spool 13, thus pre-tensioning the safety-belt, and also the spool 13 may rotate in the opposite sense, when a very heavy load is applied to the safety-belt, in order to pay-out safety-belt with a load-limiting and energy absorbing effect.

Whilst it is desirable for a safety-belt arrangement to exhibit both a pre-tensioning effect and also an effect of enabling safety-belt to be paid out the load-limiting and energy absorbing effect, it would be appropriate to provide embodiments of the invention which only one effect is present.

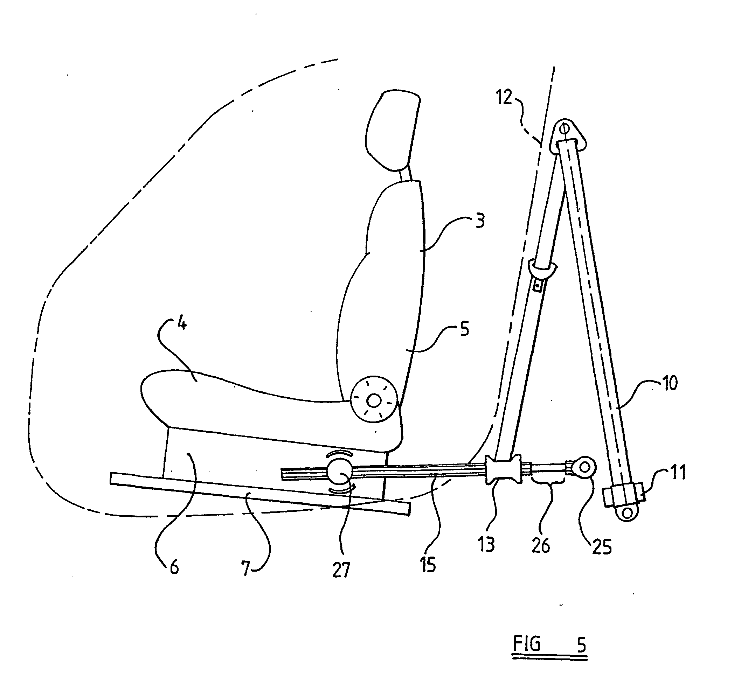

Figure 5 illustrates a second embodiment of the invention in which many features are similar to corresponding features of the first described embodiment. Those features are provided with the same reference numerals and will not be re-described.

In this embodiment of the invention, the end of the rod 15 which is adjacent the "B"-Post 12 is secured to the frame or chassis of the vehicle by a mount 25 which prevents rotation of that end of the rod 15. Adjacent the mount 25 there is a portion 26 of the bar 15 of reduced diameter which constitutes a torsion bar, that is to say a bar that may be deformed toitionally with a load-limiting and energy absorbing effect. The main body of the rod is splined, as in the embodiment of Figures 1 to 4, and the part of the rod 15 that is adjacent the carriage 6 of the seat 5, is guided by a guiding support 27 which permits the seat 3 to slide up and down the rails 6, with the rod 15 sliding through the guiding support 27. The guiding support 27 permits rotation of the rod. the spool 13 is on the main body of the rod, separated from the mount 25 by the torsion bar portion 26.

In this embodiment, no pre-tensioning effect is provided, but, if a very substantial force is applied to the safety-belt 10, when it is in use, the spool 13 will tend to rotate the main body of the bar 15, and since one end of the bar is non-rotationally fixed in position by the mount 25, the portion 26 of bar 15 of reduced diameter will deform torsionally providing a load-limiting and energy absorbing effect.

In the present Specification "comprise" means "includes or consists of" and "comprising" means "including or consisting of'.

## Claims

1. A safety-belt arrangement (1) to provide protection for a front-seat passenger (2) in a motor vehicle, the safety-belt arrangement comprising a safety-belt (10), one end of which is connected to a retractor (11) **characterised in that** that the other end of the belt (10) is connected to a spool (13) to be wound on to the spool, the spool being slidably mounted on a bar (15), the bar being located adjacent the side wall of the vehicle and extending rearwardly of the front-seat of the vehicle towards a rear seat of the vehicle, the spool (13) being adapted to be located on the forward part of the bar (15) when the safety-belt is in use, and on the rear part of the bar when the safety-belt is not in use, the spool being rotatable about an axis which is coincident with the axis of the bar for altering the amount of safety-belt wound on the spool.

2. An arrangement according to Claim 1 wherein means (18) are provided for rotating the spool (13) to wind in safety-belt on to the spool.

3. An arrangement according to Claim 1 or 2 wherein means (18) are provided to permit the spool (13) to rotate to pay-out safety-belt (10) with a load-limiting energy absorbing effect.

4. An arrangement according to any one of the preceding Claims wherein at least part of the bar (15) is adapted to rotate and spool (13) is mounted on the bar so as to rotate with the bar.

5. An arrangement according to Claim 4 wherein the bar (15) is provided with splines, and the spool (13) is provided with a splined passage that receives the splined bar.

6. An arrangement according to Claim 4 or 5 as dependent on Claim 2, wherein the means (18) for winding in safety-belt 910) comprise a mechanism adapted to rotate the bar (15).

7. An arrangement according to Claim 6 wherein the mechanism adapted to rotate the bar comprise a pre-tensioner (18) adapted to apply tension to a cable (19), that cable being partially wound on a pulley (21) mounted on the bar, the pulley being connected to the bar to rotate the bar.

8. An arrangement according to Claim 7, as dependent upon Claim 3, wherein the pre-tensioner (18) incorporates the said means for permitting the spool to rotate to pay-out the safety-belt (10).

9. An arrangement according to Claim 4 or 5, as dependent upon Claim 3, wherein part of the bar (15) is in the form of a torsionally deformable portion of the bar, one end of the bar being non-rotationally mounted in position, the deformable portion of the bar being between said one end and said spool (13).

10. An arrangement according to any one of the preceding Claims wherein the rear part of the bar (15) is mounted (16) to part of the chassis or shell of the vehicle, and the front part of the bar is mounted on a support (17) provided on a carriage (6) supporting the squab (4) of the seat, the support (17) on the carriage slidably engaging the forward part of the bar (15).

## Patentansprüche

1. Sicherheitsgurtanordnung (1) zum Bereitstellen eines Schutzes für einen auf einem vorderen Sitz sitzenden Fahrgast (2) in einem Motorfahrzeug, wobei die Sicherheitsgurtanordnung einen Sicherheitsgurt (10) aufweist, von dem ein Ende mit einer Rückzugseinrichtung (11) verbunden ist, **dadurch gekennzeichnet, daß** das andere Ende des Gurts (10) mit einer Spule (13) verbunden ist, um auf die Spule aufgewickelt zu werden, wobei die Spule verschieblich auf einer Stange (15) angebracht ist, wobei die Stange benachbart zu der Seitenwand des Fahrzeugs angeordnet ist und sich unter den vorderen Sitz des Fahrzeugs in Richtung auf einen hinteren Sitz des Fahrzeugs erstreckt, wobei die Spule (13) dafür bestimmt ist, auf dem vorderen Teil der Stange (15) angeordnet zu sein, wenn sich der Sicherheitsgurt in Gebrauch befindet, und auf dem hinteren Teil der Stange, wenn sich der Sicherheitsgurt nicht in Gebrauch befindet, wobei die Spule um eine Achse drehbar ist, die mit der Achse der Stange übereinstimmt, um die Menge des Sicherheitsgurtes, der auf der Spule aufgewickelt ist, zu verändern.

2. Anordnung nach Anspruch 1, **dadurch gekennzeichnet, daß** ein Mittel (18) vorgesehen ist, um die Spule (13) zu drehen, um den Sicherheitsgurt auf die Spule aufzuwickeln.

3. Anordnung nach Anspruch 1 oder 2, **dadurch gekennzeichnet, daß** ein Mittel (18) vorgesehen ist, um zu ermöglichen, daß sich die Spule (13) dreht, um den Sicherheitsgurt (10) mit einem lastbegrenzenden, energieabsorbierenden Effekt auszugeben.

4. Anordnung nach einem der vorangehenden Ansprüche, **dadurch gekennzeichnet, daß** zumindest ein Teil der Stange (15) dazu bestimmt ist, sich zu drehen, und wobei die Spule (13) auf der Stange angebracht ist, so daß sie sich zusammen mit der Stange dreht.

5. Anordnung nach Anspruch 4, **dadurch gekennzeichnet, daß** die Stange (15) mit Keilprofilen versehen ist, und daß die Spule (13) mit einem mit Keilprofilen versehenen Durchgang versehen ist, der die mit Keilprofilen versehene Stange aufnimmt.

6. Anordnung nach Anspruch 4 oder 5, soweit auf Anspruch 2 rückbezogen, **dadurch gekennzeichnet, daß** das Mittel (18) zum Aufwickeln des Sicherheitsgurts (10) einen Mechanismus aufweist, der dafür geeignet ist, die Stange (15) zu drehen.

7. Anordnung nach Anspruch 6, **dadurch gekennzeichnet, daß** der Mechanismus, der dafür geeignet ist, die Stange zu drehen, eine Vorspanneinrichtung (18) aufweist, die dafür geeignet ist, eine Spannung auf ein Seil (19) aufzubringen, wobei das Seil teilweise auf eine Seilrolle (21) aufgewickelt ist, die auf der Stange angebracht ist, wobei die Seilrolle mit der Stange verbunden ist, um die Stange zu drehen.

8. Anordnung nach Anspruch 7, soweit auf Anspruch 3 rückbezogen, **dadurch gekennzeichnet, daß** die Vorspanneinrichtung (18) das genannte Mittel enthält, um zu ermöglichen, daß sich die Spule dreht, um den Sicherheitsgurt (10) auszugeben.

9. Anordnung nach Anspruch 4 oder 5, soweit auf Anspruch 3 rückbezogen, **dadurch gekennzeichnet, daß** ein Teil der Stange (15) in Form eines torsionsmäßig verformbaren Abschnitts der Stange ausgebildet ist, wobei ein Ende der Stange nicht drehbar in einer Position angebracht ist, und wobei sich der verformbare Abschnitt der Stange zwischen dem genannten einen Ende und der Spule (13) befindet.

10. Anordnung nach einem der vorangehenden Ansprüche, **dadurch gekennzeichnet, daß** das hintere Ende der Stange (15) an einem Teil der Karosserie oder des Gehäuses des Fahrzeugs angebracht (16) ist, und daß der vordere Teil der Stange auf einem Träger (17) angebracht ist, der auf einem Schlitten (6) vorgesehen ist, der den Sitzteil (4) des Sitzes trägt, wobei der Träger (17) auf dem Schlitten verschieblich mit dem vorderen Teil der Stange (15) in Eingriff tritt.

## Revendications

1. Un agencement de ceinture de sécurité (1) pour fournir une protection à un passager de siège avant (2) dans un véhicule automobile, l'agencement de ceinture de sécurité comprenant une ceinture de sécurité (10), dont une extrémité est reliée à un rétracteur (11), **caractérisé en ce que** l'autre extrémité de la ceinture (10) est reliée à une bobine (13), pour être enroulée sur la bobine, la bobine étant montée à coulissement sur une barre (15), la barre étant placée de façon adjacente à la paroi latérale du véhicule et s'étendant vers l'arrière du siège avant du véhicule en direction d'un siège arrière du véhicule, la bobine (13) étant adaptée pour être placée sur la partie avant de la barre (15), lorsque la ceinture de sécurité est en utilisation, et sur la partie arrière de la barre, lorsque la ceinture de sécurité n'est pas en utilisation, la bobine étant susceptible de tourner autour d'un axe coincident avec l'axe de la barre, pour modifier la quantité de ceinture de sécurité enroulée sur la bobine.

2. Un agencement selon la revendication 1, dans lequel des moyens (18) sont prévus pour faire tourner la bobine (13) pour enrouler la ceinture de sécurité sur la bobine.

3. Un agencement selon la revendication 1 ou 2, dans lequel des moyens (18) sont prévus pour permettre à la bobine (13) de tourner pour dévider la ceinture de sécurité (10) avec un effet d'absorption d'énergie à limite de charge.

4. Un agencement selon l'une quelconque des revendications précédentes, dans lequel au moins une partie de la barre (15) est adaptée pour tourner et la bobine (13) est montée sur la barre pour tourner avec la barre.

5. Un agencement selon la revendication 4, dans lequel la barre (15) est munie de cannelures, et la bobine (13) est munie d'un passage cannelé qui reçoit la barre cannelée.

6. Un agencement selon la revendication 4 ou 5 dépendant de la revendication 2, dans lequel les moyens (18) pour enrouler la ceinture de sécurité (10) comprennent un mécanisme adapté pour faire tourner la barre (15).

7. Un agencement selon la revendication 6, dans lequel le mécanisme adapté pour faire tourner la barre comprend un pré-tensionneur (18), adapté pour appliquer une tension à un câble (19), ce câble étant partiellement enroulé sur une poulie (21) montée sur la barre, la poulie étant reliée à la barre pour faire tourner la barre.

8. Un agencement selon la revendication 7 dépendant de la revendication 3, dans lequel le pré-tensionneur (18) incorpore lesdits moyens pour permettre à la bobine de tourner pour dévider la ceinture de sécurité (10).

9. Un agencement selon la revendication 4 ou 5 dépendant de la revendication 3, dans lequel une partie de la barre (15) se présente sous la forme d'une partie déformable en torsion de la barre, une extrémité de la barre étant montée en position, sans possibilité de rotation, la partie déformable de la barre étant située entre ladite une extrémité et ladite bobine (13).

10. Un agencement selon l'une quelconque des revendications précédentes, dans lequel la partie arrière de la barre (15) est montée (16) sur une partie du châssis ou de la carrosserie du véhicule, et la partie avant de la barre est montée sur un support (17) prévu sur un chariot (6) supportant l'assise (4) du siège, le support (17) sur le chariot venant en prise avec coulissement avec la partie avant de la barre (15).
